# EUROPÄISCHE PATENTANMELDUNG

(11) **EP 4 725 738 A1**
(43) Veröffentlichungstag der Anmeldung: **15.04.2026**
(21) Anmeldenummer: 24210538.5
(22) Anmeldetag: 04.11.2024

(54) **BATTERIEWANNE UND VERFAHREN ZUM HERSTELLEN EINER BATTERIEWANNE**

(30) Priorität: 11.10.2024 DE 102024129523
(71) Anmelder: voestalpine Stahl GmbH, 4020 Linz (AT); voestalpine Metal Forming GmbH, 3500 Krems an der Donau (AT)
(72) Erfinder: Radlmayr, Karl, 4020 Linz (AT); Geirhofer, Richard, 4073 Wilhering (AT); Sell, Johannes, 4030 Linz (AT)
(74) Vertreter: Bratovic, Nino Maria

(57) **Zusammenfassung**

Die Erfindung schafft eine Batteriewanne (100; 200) zum Aufnehmen einer Batterie (20), umfassend:
ein Wannengehäuse (190; 290);
wobei eine Schicht elektrischer Leiterbahnen (130) an oder über einer durchgehenden ersten Schicht (110; 210) des Wannengehäuses (190; 290) an dessen konkaver Seite angeordnet ist, und
wobei in der Schicht elektrischer Leiterbahnen (130) zumindest an einem ebenen Abschnitt des Wannengehäuses (190; 290) eine Vielzahl von elektrisch auslesbaren Deformations-Messstrukturen (140) ausgebildet ist.

## Beschreibung

### Technisches Gebiet

Die vorliegende Erfindung betrifft eine Batteriewanne sowie ein Verfahren zum Herstellen einer Batteriewanne, insbesondere eine Batteriewanne zum Aufnehmen einer Fahrzeugbatterie in einem Fahrzeug.

### Technischer Hintergrund

Wiederaufladbare Batterien wie etwa Fahrzeugbatterien für batterieelektrische oder Hybridfahrzeuge, werden häufig in Batteriewannen aufgenommen, in welchen sie transportierbar und vor äußeren Einflüssen geschützt sind.

Insbesondere Fahrzeugbatterien werden typischerweise möglichst weit unten im Fahrzeug angeordnet, um den Schwerpunkt möglichst tief zu halten und die Straßenlage des Fahrzeugs so zu verbessern. Die jeweilige Batteriewanne, in der die Fahrzeugbatterie angeordnet ist, ist für gewöhnlich aus einem robusten Material gefertigt und trägt zum Beispiel dazu bei, Stöße von außen, welche die Fahrzeugbatterie sonst beschädigen oder gar zerstören könnten, abzumildern oder vollständig abzuwehren.

Da Beschädigungen der Fahrzeugbatterie negative Einflüsse auf andere Bestandteile oder auf die Fahreigenschaften des Fahrzeugs haben können, ist es vorteilhaft, zu erkennen, ob und in welchem Ausmaß eine Beschädigung der Batteriewanne erfolgt ist.

Aus der DE 10 2020 119 287 A1 ist beispielsweise eine Schutzplatte mit integrierter Leiterbahn als Deformationssensor bekannt, welche an der konvexen Außenseite einer Batteriewanne angeordnet wird. Somit kann die Schutzplatte verschiedene externe Einflüsse bis zu einem gewissen Grad von der Batteriewanne fernhalten. Erfüllt die Schutzplatte diese Funktion, wird es daher häufig dazu kommen, dass der integrierte Deformationssensor einen Schaden vermeldet, weil die Schutzplatte beschädigt wurde, wobei dann unklar bleibt, ob die zu schützende Batteriewanne (oder sogar die Fahrzeugbatterie an sich) tatsächlich Schaden genommen hat.

### Zusammenfassung der Erfindung

Es ist daher eine Aufgabe der vorliegenden Erfindung, eine verbesserte Batteriewanne und ein Verfahren zum Herstellen einer verbesserten Batteriewanne bereitzustellen, welche insbesondere eine verbesserte Detektion von etwaigen Schäden ermöglichen.

Diese Aufgaben werden durch die Gegenstände der unabhängigen Patentansprüche sowie die beschriebenen Aspekte der vorliegenden Erfindung gelöst.

Dementsprechend wird eine Batteriewanne zum Aufnehmen einer Batterie (insbesondere einer Fahrzeugbatterie) bereitgestellt, umfassend:
ein Wannengehäuse;
wobei eine Schicht elektrischer Leiterbahnen an (d.h. unmittelbar auf) oder über (d.h. beispielsweise auch mittelbar auf) einer durchgehenden ersten Schicht des Wannengehäuses an dessen konkaver Seite angeordnet ist, und
wobei in der Schicht elektrischer Leiterbahnen zumindest an einem ebenen Abschnitt des Wannengehäuses eine Vielzahl von elektrisch auslesbaren Deformations-Messstrukturen ausgebildet ist.

Es ist somit eine grundlegende Idee der vorliegenden Erfindung, dass Deformations-Messtrukturen an der Innenseite eines Wannengehäuses einer Batteriewanne, also an der konkaven Seite, angeordnet sind. Auf diese Weise besteht eine erhöhte Wahrscheinlichkeit, dass von diesen Deformations-Messstrukturen festgestellte Deformationen nicht nur eine vorgelagerte Schutzplatte oder das Wannengehäuse an sich betreffen, sondern tatsächlich die innenliegende Batterie beschädigt haben. Im zusammengebauten Zustand liegt somit die Schicht elektrischer Leiterbahnen mit den Deformations-Messstrukturen insbesondere zwischen der Batterie (z.B. einer Fahrzeugbatterie) und dem Wannengehäuse.

Die Schicht elektrischer Leiterbahnen kann entweder direkt auf der durchgehenden ersten Schicht angeordnet sein, oder über dieser, d.h., es können dazwischen weitere Schichten vorliegen, beispielsweise mindestens eine elektrisch isolierende Schicht und/oder eine Lackschicht oder dergleichen.

Gemäß einigen bevorzugten Ausführungsformen, Varianten oder Verfeinerungen von Ausführungsformen ist die erste Schicht des Wannengehäuses aus einem Metall, insbesondere aus Stahl oder Aluminium oder aus einer Stahl- oder Aluminiumlegierung, ausgebildet. Zwischen der ersten Schicht und der Schicht elektrischer Leiterbahnen ist bevorzugt mindestens (oder genau) eine elektrisch isolierende Schicht angeordnet, beispielsweise ein elektrisch isolierender Lack. Die erste Schicht aus Metall zu fertigen hat den Vorteil, dass Metall inelastisch ist, und somit erfolgte Verformungen, etwa durch Stöße, auch physisch sichtbar, sowie dauerhaft durch die Deformations-Messstrukturen messbar, bleiben. Solche Verformungen können zum Beispiel zur Plausibilisierung zusätzlich optisch (etwa visuell) ausgewertet werden.

Gemäß einigen bevorzugten Ausführungsformen, Varianten oder Verfeinerungen von Ausführungsformen ist die Schicht elektrischer Leiterbahnen in eine (insbesondere ansonsten durchgehende) zweite Schicht des Wannengehäuses eingebettet, beispielsweise seitlich oder an allen Seiten, also insbesondere auch von oben, d.h. an einer von der durchgehenden ersten Schicht abgewandten Seite der Schicht elektrischer Leiterbahnen. Die zweite Schicht kann dabei eine isolierende Schicht und/oder eine Schutzschicht sein.

Gemäß einigen bevorzugten Ausführungsformen, Varianten oder Verfeinerungen von Ausführungsformen ist die zweite Schicht eine Lackbeschichtung, die insbesondere über die Schicht elektrischer Leiterbahnen und Zwischenräume in dieser Schicht aufgetragen werden kann. Diese Lackbeschichtung als zweite Schicht kann direkt auf der Schicht elektrischer Leiterbahnen, wo diese vorhanden ist, und ansonsten direkt auf derjenigen Schicht, an welcher die Schicht elektrischer Leiterbahnen angebracht ist, aufgetragen sein.

Gemäß einigen bevorzugten Ausführungsformen, Varianten oder Verfeinerungen von Ausführungsformen umfasst das Wannengehäuse einen in Wannenform ausgebildeten ersten metallischen Bestandteil sowie einen flachen (d.h. plan ausgeführten) zweiten metallischen Bestandteil, beispielsweise eine metallische Platte. Der metallische zweite Bestandteil kann insbesondere direkt an einem Wannenboden der Wannenform des ersten Bestandteils an dessen konkaver Seite angebracht sein.

Die durchgehende erste Schicht des Wannengehäuses kann von dem zweiten Bestandteil gebildet sein.

Sowohl bei dem Material des ersten als auch bei dem des zweiten metallischen Bestandteils kann es sich jeweils insbesondere um Stahl oder Aluminium oder ein Stahl- oder Aluminiumlegierung handeln.

Auf diese Weise können die Vorteile von metallischen Werkstoffen kombiniert werden: der erste metallische Bestandteil kann unter Verwendung einfacher

Umformungstechniken, beispielsweise Tiefziehen, geformt werden, während daran keine Leiterbahnen angeordnet sind, was die Umformung deutlich vereinfacht. Die Schicht elektrischer Leiterbahnen kann hingegen an dem flachen zweiten metallischen Bestandteil angeordnet sein, was das Erzeugen der Leiterbahnen vereinfacht, da die Leiterbahnen beispielsweise aufgedruckt werden können.

Der metallische erste Bestandteil behält seine Form nach einer Beschädigung in der Regel bei, sodass eine Beschädigung physisch sichtbar bleibt, und, was noch wichtiger ist, durch nachfolgende Messungen somit auch noch erfasst werden kann.

Der zweite Bestandteil ist vorteilhaft als eine metallische Platte mit einer Dicke von 1 Millimeter oder weniger, insbesondere von 0,5 Millimeter oder weniger, ausgebildet. Auf diese Weise erhöht sich das Gesamtgewicht des Wannengehäuses nur in geringem Maße.

Der zweite Bestandteil kann beispielsweise als so genannter "tailormade functional steel", TFS, ausgebildet sein, und somit in entsprechenden fortgeschrittenen Herstellungsverfahren erzeugt werden.

Ein weiterer Vorteil bei der Variante mit den beiden metallischen Bestandteilen ist, dass die Batteriewanne leicht an Kundenbedürfnisse angepasst werden kann. Beispielsweise kann der erste metallische Bestandteil, also die Wannenform, für eine Vielzahl von Produkten mit derselben Form hergestellt werden, wodurch sich auch Vorteile bei der Lagerung und Lagerlogistik ergeben. Unterschiedliche Verschaltungen oder Leitungsanordnungen der Batteriewanne können dann in einfacher Weise durch die Auswahl und Anbringung eines jeweils unterschiedlichen zweiten metallischen Bestandteils bereitgestellt werden.

Beispielsweise können so auch in derselben geometrischen Wannenform, je nach darin angeordneter metallischer Platte, unterschiedliche Funktionen bereitgestellt werden, etwa für unterschiedliche Batterietypen, Fahrzeugtypen, oder für Basis- und Premiumfunktionen. Die geometrische Form der Batteriewanne kann somit optimal an einen bestimmten Fahrzeugtyp, eine Karosserie, eine Fahrzeugplattform etc. angepasst sein, während sich die elektrischen Funktionen, aber auch z.B. der Ort der Anschlusskontakte, der Batteriewanne einzeln anpassen lassen.

Außerdem ist sogar ein Wechsel der Leitungsanordnung einer bestehenden Batteriewanne leicht möglich, indem einfach der zweite metallische Bestandteil, also die metallische Platte, ausgewechselt wird. Ein Upgrade oder Recycling ist somit ohne Probleme möglich.

Gemäß einigen bevorzugten Ausführungsformen, Varianten oder Verfeinerungen von Ausführungsformen sind die Deformations-Messstrukturen zumindest teilweise (oder alle) als kapazitive Sensorstrukturen ausgebildet, beispielsweise zumindest teilweise (oder alle) als Interdigitalelektroden. Durch eine Verformung des Wannengehäuses verändern sich die kapazitiven Kopplungen zwischen den Einzelelektroden der Interdigitalelektroden betroffener Sensorstrukturen, was durch eine entsprechende Auswertevorrichtung erfassbar ist.

Gemäß einigen bevorzugten Ausführungsformen, Varianten oder Verfeinerungen von Ausführungsformen sind die Deformations-Messstrukturen zumindest teilweise als resistive Sensorstrukturen ausgebildet. Durch eine Verformung des Wannengehäuses werden betroffene Deformations-Messstrukturen gedehnt, gestaucht, oder unterbrochen, wodurch sich ihr elektrischer Widerstand (insbesondere Ohm'scher Widerstand) verändert, was durch eine entsprechende Auswertevorrichtung erfassbar ist.

Es kann eine Temperaturkompensation vorgesehen sein, wonach eine Temperatur der Batteriewanne, des Wannengehäuses, oder sogar individuelle Deformations-Messstrukturen, erfasst wird, und thermisch bedingte Veränderungen des elektrischen Widerstands der Deformations-Messstrukturen bei der Auswertung durch die Auswertevorrichtung außer Acht gelassen werden. Hierfür können in oder an dem Wannengehäuse ein oder mehrere Temperatursensoren angeordnet sein, welche durch die Auswertevorrichtung ebenfalls auswertbar sind.

Gemäß einigen bevorzugten Ausführungsformen, Varianten oder Verfeinerungen von Ausführungsformen sind die (insbesondere kapazitiven oder resistiven) Sensorstrukturen an einer von dem Wannengehäuse abgewandten Seite mit einem Kunststoffschaum, insbesondere Polyurethanschaum oder Polystyrol, bedeckt. Dabei kann der Kunststoffschaum direkt auf den Sensorstrukturen und/der der zweiten Schicht des Wannengehäuses angeordnet sein, oder mit einem Zwischenraum.

Gemäß einigen bevorzugten Ausführungsformen, Varianten oder Verfeinerungen von Ausführungsformen umfasst die Batteriewanne ferner eine Auswertevorrichtung, welche dazu eingerichtet ist:
ein elektrisches Anregungssignal an zumindest einen Teil (und bevorzugt alle) der Deformations-Messstrukturen anzulegen,
sowie eine jeweilige Signalantwort der Deformations-Messstrukturen auf das jeweilige Anregungssignal auszulesen, um darauf basierend einen Normalzustand oder einen Deformationszustand der jeweiligen Deformations-Messstruktur zu bestimmen.

Die Natur von Anregungssignal und Signalantwort hängen insbesondere von der gewählten Ausgestaltung der Deformations-Messstrukturen ab: bei resistiven Sensorstrukturen als Deformations-Messstrukturen kann das Anregungssignal beispielsweise eine angelegte Spannung mit einem vorbestimmten Spannungswert sein, und die Signalantwort entsprechend ein gemessener elektrischer Strom, der somit den jeweils aktuellen elektrischen Widerstand anzeigt. Bei kapazitiven Sensorstrukturen kann das Anregungssignal beispielsweise ein Wechselstromsignal sein, und die Signalantwort ein von der jeweils aktuellen Kapazität abhängiger Blindstrom.

Die Auswertevorrichtung kann eine digitale Recheneinrichtung aufweisen. Eine solche digitale Recheneinrichtung kann als eine beliebige Vorrichtung realisiert sein oder werden, welche zum Rechnen, und insbesondere zum Ausführen einer Software, einer App, oder eines Algorithmus in der Lage ist. Die Recheneinrichtung kann beispielsweise mindestens eine Prozessoreinheit aufweisen, z. B. eine Zentralprozessoreinheit (CPU) und/oder eine Graphikprozessoreinheit (GPU) und/oder eine Feld-programmierbare Logikschaltung (FPGA) und/oder eine anwendungsspezifische integrierte Schaltung (ASIC) und/oder eine Kombination davon. Die Recheneinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Recheneinrichtung kann ganz oder vollständig in einem lokalen Gerät und/oder ganz oder vollständig in einem entfernten System implementiert sein wie etwa in einem entfernt angeordneten Server und/oder einer Cloud-Computing-Plattform.

Die Auswertevorrichtung kann ebenfalls in dem konkaven Hohlraum der Batteriewanne angeordnet sein, beispielsweise unmittelbar oder mittelbar an dem Wannenboden der Batteriewanne angebracht, insbesondere mit Leiterbahnen der Schicht elektrischer Leiterbahnen verschaltet. Somit können Signalleitungen für die Anregungssignale und die Signalantworten vorteilhaft innerhalb der Schicht elektrischer Leiterbahnen angeordnet sein.

Die Auswertevorrichtung kann auch außerhalb der Batteriewanne angeordnet sein. Elektrische Zu- und Ableitungen zwischen den Deformations-Messstrukturen und der Auswertevorrichtung können entlang der Innenwände des Wannengehäuses der Batteriewanne verlaufen.

In einigen Varianten, in welchen die erste Schicht des Wannengehäuses aus einem Metall ausgebildet ist, können die Zu- und Ableitungen bei der Herstellung der Batteriewanne zunächst auf oder über der ersten Schicht angebracht werden, und dann gemeinsam mit den Teilen des Wannengehäuses, welche dazu bestimmt sind, Wände des Wannengehäuses zu bilden, verformt werden, beispielsweise in einem Tiefziehverfahren.

Gemäß einigen bevorzugten Ausführungsformen, Varianten oder Verfeinerungen von Ausführungsformen ist die Auswertevorrichtung in einem Kalibriervorgang derart kalibrierbar, dass eine jeweilige aktuelle Signalantwort während des Kalibriervorgangs den Normalzustand anzeigt und Abweichungen davon den Verformungszustand der jeweiligen Deformations-Messstruktur anzeigen. Hierdurch kann nicht nur unmittelbar nach der Fertigstellung der Batteriewanne oder nach deren Einbau (z.B. in ein Fahrzeug) der Kalibriervorgang als eine Anfangs-Kalibrierung vorgenommen werden, sondern es sind auch regelmäßige, oder ereignisbasierte, Kalibriervorgänge als Nachkalibrierungen möglich. Eine mögliche Nachkalibrierung betrifft beispielsweise eine aktuelle Temperatur in der Batteriewanne, und kann beispielsweise regelmäßig oder ereignisbasiert (etwa beim Über- und/oder Unterschreiten von Temperaturschwellen) erfolgen.

Eine Nachkalibrierung kann beispielsweise auch nach dem Feststellen eines Deformationszustands erfolgen, etwa wenn eine Deformation der Batteriewanne festgestellt wurde, welche die Funktion der Batteriewanne nicht (oder nur innerhalb eines vorbestimmten Toleranzbereichs) beeinträchtigt. Daraufhin kann in dem Kalibriervorgang der aktuelle Zustand wieder als Normalzustand definiert werden, sodass nur noch darüber hinaus gehende, zusätzliche Verformungen erfasst werden.

Gemäß einem weiteren Aspekt stellt die Erfindung außerdem ein Verfahren zum Herstellen einer Batteriewanne (insbesondere einer erfindungsgemäßen Batteriewanne) bereit, wobei das Verfahren zumindest die folgenden Schritte umfasst:
Aufbringen einer Vielzahl von elektrisch auslesbaren Deformations-Messstrukturen (z.B. in einem Druckverfahren) an oder über einem Abschnitt eines flachen metallischen Rohlings (beispielsweise einer Metallplatte); und
Umformen des flachen metallischen Rohlings mit den aufgebrachten Deformations-Messstrukturen in ein Wannengehäuse (oder, anders ausgedrückt: in eine Wannenform eines Wannengehäuses).

Die Deformations-Messstrukturen können, insbesondere vor dem Umformen des Rohlings, in eine Isolierschicht eingebettet werden.

Auf dem flachen metallischen Rohling kann eine isolierende Schicht, z.B. eine Lackschicht, angeordnet sein, wobei die Vielzahl der Deformations-Messstrukturen unmittelbar auf dieser isolierenden Schicht aufgebracht wird.

Auf diese Weise können die Deformations-Messstrukturen in einfacher Weise auf einem flachen Rohling angeordnet werden, welcher erst danach in die Wannenform gebracht wird. Das Umformen kann beispielsweise mittels Tiefziehen erfolgen. Die umgeformten Flächen (beispielsweise die Wände der Wannenform des Wannengehäuses) können Zu- und/oder Ableitungen zu den Deformations-Messstrukturen umfassen, oder, vorteilhaft, frei von elektrischen Leiterbahnen sein.

Gemäß einigen bevorzugten Ausführungsformen, Varianten oder Verfeinerungen von Ausführungsformen bleibt der Abschnitt des Rohlings mit den Deformations-Messstrukturen unverformt. Mit anderen Worten verändert sich der Rohling durch das Umformen im Bereich der Deformations-Messstrukturen nicht, und insbesondere die Deformations-Messstrukturen bleiben unverformt. Auf diese Weise können Beschädigungen und unerwünschte Verformungen der Deformations-Messstrukturen bei der Herstellung der Batteriewanne vermieden werden.

In Varianten, in denen der Abschnitt des Rohlings mit den Deformations-Messstrukturen vollständig oder teilweise verformt wird, können zumindest die betroffenen Deformations-Messstrukturen mittels der vorangehend beschriebenen Auswertevorrichtung kalibriert werden.

Gemäß einigen bevorzugten Ausführungsformen, Varianten oder Verfeinerungen von Ausführungsformen umfasst das Verfahren außerdem die folgenden Schritte:
Anlegen eines elektrischen Anregungssignals an zumindest einen Teil der Deformations-Messstrukturen (falls ein Umformen erfolgt, dann insbesondere nach dem Umformen);
Elektrisches Auslesen einer jeweiligen Signalantwort der Deformations-Messstrukturen auf das jeweils angelegte Anregungssignal; und
Kalibrieren einer Auswertevorrichtung derart, dass die jeweils ausgelesene Signalantwort einen unverformten Normalzustand der jeweiligen Deformations-Messstruktur anzeigt und Abweichungen in der Signalantwort einen Verformungszustand der jeweiligen Deformations-Messstruktur anzeigen.

Wie im Vorangehenden bereits mit Bezug auf die Auswertevorrichtung beschrieben wurde, kann auf diese Weise eine optimale Einstellung der Funktion(en) der Batteriewanne erfolgen, insbesondere unmittelbar nach der Herstellung der Batteriewanne und/oder nach einem Einbau der Batteriewanne in den Bestimmungsort, etwa ein Fahrzeug.

Das Anlegen des Anregungssignals, das Auslesen der Signalantwort und/oder das Kalibrieren der Auswertevorrichtung (insbesondere alle drei dieser Schritte) können vorteilhaft auf ein- oder mehrmals, regelmäßig oder ereignisbasiert, während des Betriebs der Batterie in der Batteriewanne erfolgen, insbesondere zur Nachkalibrierung.

Gemäß einem weiteren Aspekt stellt die Erfindung außerdem ein weiteres Verfahren zum Herstellen einer Batteriewanne bereit, umfassend zumindest die Schritte:
Aufbringen einer Vielzahl von elektrisch auslesbaren Deformations-Messstrukturen an (d.h. unmittelbar auf) oder über (d.h. beispielsweise auch mittelbar auf) einer metallischen Platte; und
Befestigen der metallischen Platte innen an einem Wannenboden einer metallischen Wannenform.

Die metallische Wannenform kann insbesondere aus Stahl oder Aluminium oder aus einer Stahl- oder Aluminiumlegierung ausgebildet sein. Optional umfasst das Verfahren auch das Herstellen der metallischen Wannenform, beispielsweise durch Tiefziehen aus einem metallischen Blech.

Das Formen der Wannenstruktur wird somit von dem Aufbringen der Deformations-Messstrukturen an deren Träger vollständig entkoppelt. Somit können sowohl für das Aufbringen der Deformations-Messstrukturen als auch für das Herstellen der Wannenform jeweils die am besten geeigneten Verfahren verwendet werden, ohne Rücksicht auf den jeweils anderen Bestandteil.

Die getrennte Fertigung der Bestandteile ermöglicht es außerdem, ein und dieselbe Wannenform jeweils mit unterschiedlich ausgestalteten metallischen Platten (insbesondere was die Deformations-Messstrukturen und/oder deren Verschaltung angeht) zu kombinieren. Für Batteriewannen mit unterschiedlichen elektrischen Varianten braucht somit nur die Herstellung des Bestandteils mit der metallischen Platte verändert zu werden, was positive Skaleneffekte mit sich bringt. Zudem können die metallischen Platten, selbst mit daran angebrachten Deformations-Messstrukturen, einfacher gelagert werden als die fertigen Batteriewannen, was die Logistik der Herstellung ebenfalls vereinfacht.

Weitere vorteilhafte Ausführungsformen, Varianten, und Verfeinerungen von Ausführungsformen ergeben sich aus der nachfolgenden detaillierten Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen hierbei:
- Fig. 1: eine schematische Querschnittsdarstellung zur Erläuterung einer Batteriewanne gemäß einer Ausführungsform der vorliegenden Erfindung;
- Fig. 2A: eine schematische isometrische Darstellung der Batteriewanne aus Fig. 1;
- Fig. 2B: eine schematische Draufsicht auf eine Batteriewanne nach einer Variante;
- Fig. 3: einen beispielhaften Ausschnitt aus einer erfindungsgemäßen Batteriewanne gemäß einer Variante;
- Fig. 4: einen beispielhaften Ausschnitt aus einer erfindungsgemäßen Batteriewanne gemäß einer weiteren Variante;
- Fig. 5: eine schematische Querschnittsdarstellung zur Erläuterung einer Batteriewanne gemäß einer weiteren Ausführungsform der vorliegenden Erfindung;
- Fig. 6: ein schematisches Flussdiagramm zum Erläutern eines Verfahrens zum Herstellen einer Batteriewanne gemäß einer Ausführungsform der vorliegenden Erfindung; und
- Fig. 7: ein schematisches Flussdiagramm zum Erläutern eines Verfahrens zum Herstellen einer Batteriewanne gemäß einer weiteren Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

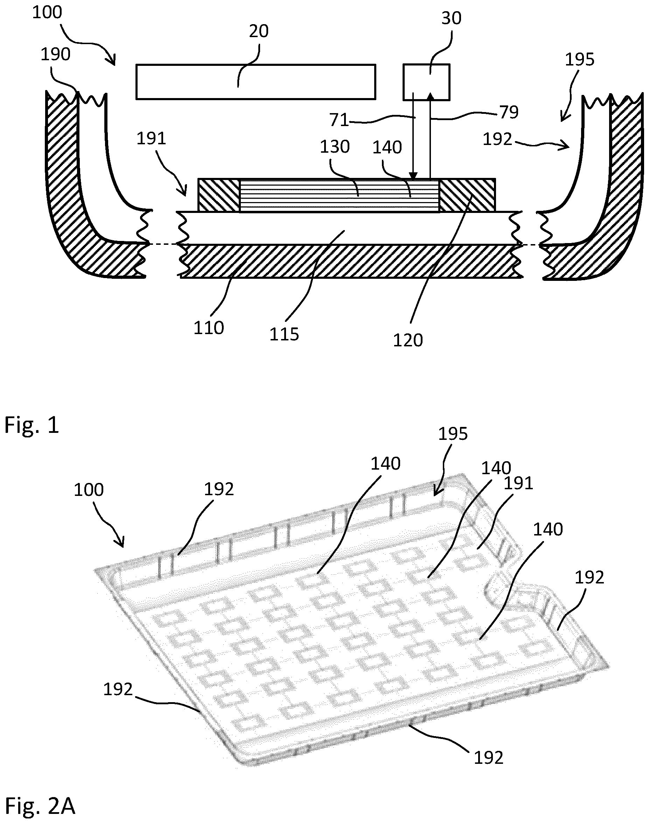

Fig. 1 zeigt eine schematische Querschnittsdarstellung zur Erläuterung einer Batteriewanne 100 gemäß einer Ausführungsform der vorliegenden Erfindung.

Die Batteriewanne 100 aus Fig. 1 umfasst ein Wannengehäuse 190, welches in Wannenform mit einem Wannenboden 191 und Wannenwänden 192 im Wesentlichen aus einem Metall ausgebildet ist. Das Metall kann beispielsweise Stahl, eine Stahllegierung, Aluminium, und/oder eine Aluminiumlegierung umfassen oder daraus bestehen. Das Metall bildet eine erste durchgehende Schicht 110 des Wannengehäuses 190. In dem dargestellten Beispiel ist das Metall zumindest an seiner Innenseite (d.h. an derjenigen Seite, welche in dem konkaven Hohlraum 195 innerhalb der Wannenform angeordnet ist) mit einer elektrisch isolierenden Beschichtung 115 beschichtet, beispielsweise mit einem Lack.

Hier und im Folgenden beziehen sich Bezeichnungen wie "innen" oder "Innenseite" stets auf den von der Wannenform gebildeten konkaven Hohlraum 195, während sich "außen" oder "Außenseite" stets auf den Raum außerhalb der Wannenform, insbesondere an dessen konvexer Seite, beziehen.

Die Batteriewanne 100 ist zur Aufnahme einer Batterie 20 in dem konkaven Hohlraum 195 vorgesehen. In einigen Varianten umfasst die Batteriewanne 100 eine in dem konkaven Hohlraum 195 angeordnete Batterie 20, insbesondere eine Fahrzeugbatterie.

Über der Innenseite der ersten Schicht 110, hier beispielsweise unmittelbar an der elektrisch isolierenden Beschichtung 115, ist eine Schicht elektrischer Leiterbahnen 130 angeordnet. In der Schicht elektrischer Leiterbahnen 130 ist an einem ebenen Abschnitt des Wannengehäuses 190 am Wannenboden 191 eine Vielzahl von elektrisch auslesbaren Deformations-Messstrukturen 140 ausgebildet, welche im Folgenden anhand der Fig. 2A bis 4 noch näher erläutert werden.

Die Schicht elektrischer Leiterbahnen 130 ist vorteilhaft in eine durchgehende zweite Schicht 120 eingebettet, welche beispielsweise als eine elektrisch isolierende Lackbeschichtung ausgebildet sein kann. Die zweite Schicht 120 kann sowohl neben der Schicht elektrischer Leiterbahnen 130 als auch oberhalb dieser verlaufen, um diese nach innen gegen Beschädigungen zu schützen. Hierzu kann die zweite Schicht 120 beispielsweise aufgetragen werden, nachdem die Deformations-Messstrukturen 140 über der ersten Schicht 110 aufgetragen wurden.

Die Batteriewanne 100 umfasst optional auch eine Auswertevorrichtung 30, welche dazu eingerichtet ist, ein elektrisches Anregungssignal 71 an zumindest einen Teil (bevorzugt an alle) der Deformations-Messstrukturen 140 anzulegen, sowie eine jeweilige (insbesondere elektrische) Signalantwort 79 der Deformations-Messstrukturen 140 auf das jeweilige Anregungssignal 71 auszulesen, um darauf basierend einen Normalzustand oder einen Deformationszustand der jeweiligen Deformations-Messstruktur 140 zu bestimmen.

Das Bestimmen eines Deformationszustands kann entweder lediglich die Information umfassen, dass eine Deformation der entsprechenden Deformations-Messstruktur 140 stattgefunden hat, oder kann zusätzlich weitere Informationen umfassen, beispielsweise einen Grad der Verformung, einen Zeitpunkt der Verformung und/oder dergleichen mehr. Die jeweiligen Informationen können durch ein Ausgabesignal der Auswertevorrichtung 30 angezeigt werden.

Die Auswertevorrichtung 30 kann, wie in Fig. 1 schematisch dargestellt ist, zusammen mit der Batterie 20 in den konkaven Hohlraum 195 in dem Wannengehäuse 190 eingesetzt werden. Die Batterie 20, die Auswertevorrichtung 30 und das Wannengehäuse 190 können dazu derart dimensioniert werden, dass die Auswertevorrichtung 30 und die Batterie 20 nebeneinander über oder an der obersten Schicht des Wannenbodens 191 (hier: auf der Schicht elektrischer Leiterbahnen 130 und der zweiten Schicht 120) angebracht werden. Die Auswertevorrichtung 30 kann direkt oder mittelbar mit den Leiterbahnen der Schicht elektrischer Leiterbahnen 130 verbunden werden, um die Anregungssignale 71 an die Deformations-Messstrukturen 140 anlegen zu können und um die Signalantworten 79 von den Deformations-Messstrukturen 140 empfangen zu können. Hierfür können Drähte, Kabel, flexible Leiterbahnen oder Ähnliches verwendet werden.

Alternativ kann die Auswertevorrichtung 30 auch außerhalb des Wannengehäuses 190 angeordnet werden. In diesem Fall können Zu- und Ableitungen oder Signalleitungen zwischen den Deformations-Messstrukturen 140 und der Auswertevorrichtung 30 an den Wannenwänden 191 angeordnet sein. Hierzu kann sich die Schicht elektrischer Leiterbahnen 130 ganz oder teilweise auch über die Wannenwände 191 erstrecken und die Zu- und Ableitungen umfassen.

Zur Herstellung können hierzu die erste Schicht 110, die zweite Schicht 120, und die Schicht elektrischer Leiterbahnen 130 zunächst im flachen Zustand aneinander vorgesehen werden, und danach gemeinsam durch ein Umformen (beispielsweise Tiefziehen) in die Wannenform gebracht werden.

Ist die Auswertevorrichtung 30 innerhalb des Wannengehäuses 190 angeordnet, können Zu- und Ableitungen der Auswertevorrichtung 30 an ein externes Gerät vorgesehen sein, etwa einen Fahrzeugcomputer und/oder eine Batteriesteuerung. Über eine Ableitung können Signale, welche den durch die Auswertevorrichtung 30 bestimmten Zustand der Deformations-Messstrukturen 140 (jeweils Normalzustand oder Verformungszustand) anzeigen, von der Auswertevorrichtung 30 ausgegeben werden. Über eine Zuleitung kann beispielsweise ein Auslöser empfangen werden, als Reaktion auf welchen die Auswertevorrichtung 30 ein oder mehrere Anregungssignale 71 aussendet und/oder einen Kalibriervorgang durchführt.

Fig. 2A zeigt eine beispielhafte isometrische Darstellung einer erfindungsgemäßen Batteriewanne 100. Im Wesentlichen der gesamte flache Wannenboden 191 ist, vorzugsweise in einem regelmäßigen Raster, mit einzelnen Deformations-Messstrukturen 140 versehen. Die Deformations-Messstrukturen 140 können jeweils einzeln elektrisch auslesbar sein, oder vollständig oder teilweise reihen- oder parallelverschaltet sein, um durch die Auswertevorrichtung 30 zumindest teilweise als Gruppe ausgelesen zu werden.

Die einzelnen Deformations-Messstrukturen 140 können kapazitiv oder resistiv ausgebildet sein, wobei entweder alle Deformations-Messstrukturen 140 resistiv, oder alle Deformations-Messstrukturen 140 kapazitiv, oder manche Deformations-Messstrukturen 140 resistiv und andere Deformations-Messstrukturen 140 kapazitiv ausgebildet sein können.

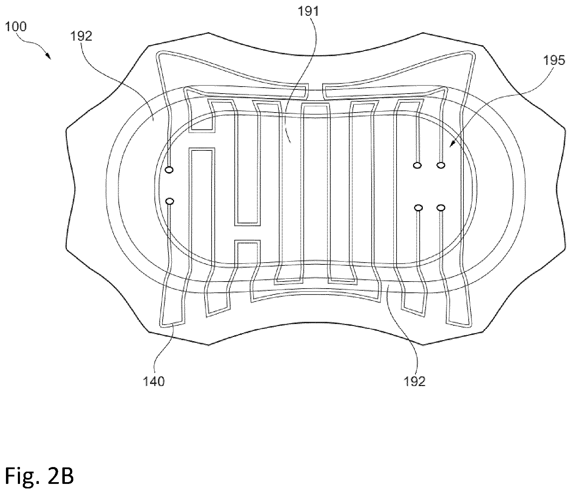

Fig. 2B zeigt eine schematische Draufsicht auf eine Batteriewanne 100 nach einer Variante. Bei der Batteriewanne aus Fig. 2B erstrecken sich einzelne Deformations-Messstrukturen 140 auch über die verformten Wannenwände 192; somit kann auch eine Deformation der Wannenwände 192 erfasst werden. Beispielhaft sind in Fig. 2B drei einzelne resistiv ausgebildete Deformations-Messstrukturen 140 als separate Stromkreise dargestellt, mit denen jeweils ein entsprechender Bereich der Batteriewanne 100 auf Deformationen überwacht werden kann.

Diese einzelnen resistiven Deformations-Messstrukturen 140 können gleichartig oder verschiedenartig ausgestaltet und geformt sein, symmetrisch oder unsymmetrisch, und gleich oder verschieden groß. Auf diese Weise können beispielsweise einzelne Bereiche der Batteriewanne 100, in denen sich bestimmte Abschnitte der Batterie 20 oder andere in der Batteriewanne 100 angeordnete Elemente befinden, einzeln überwacht werden.

Über die in Fig. 2B jeweils offen gezeigten Anschlusskontakte der jeweiligen Deformations-Messstruktur 140 kann entweder eine jeweilige Auswertevorrichtung 130 oder eine gemeinsame Auswertevorrichtung 130 elektrisch angeschlossen werden, um das Anregungssignal 71 und die Signalantwort 79 auszutauschen.

Für die Herstellung der Batteriewanne 100 aus Fig. 2B kann ein Blech vor oder nach dem Auftragen der Deformations-Messstrukturen 140 gestanzt oder geschnitten werden, um die in Fig. 2B gezeigte charakteristische Außenkontur zu erzeugen, und dann, mit den daran angebrachten Deformations-Messstrukturen 140, verformt (insbesondere tiefgezogen) werden, um die gezeigte 3-dimensionale Form zu erzielen.

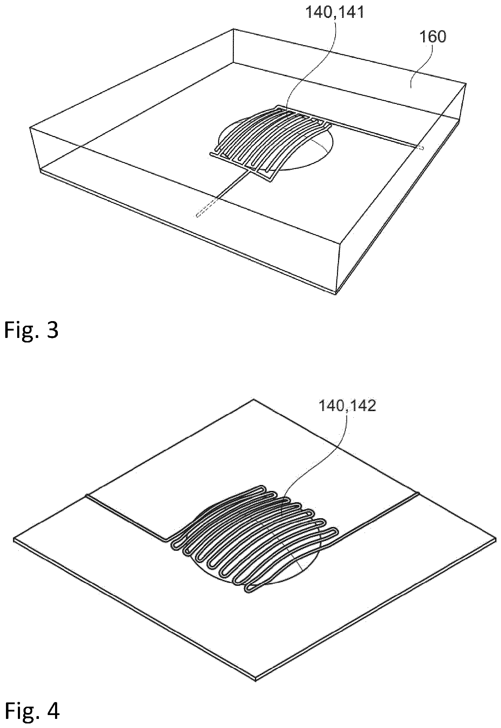

Fig. 3 zeigt eine beispielhafte isometrische Darstellung eines Ausschnitts aus der Batteriewanne 100, welcher eine einzelne, Deformations-Messstruktur 140 enthält, welche als kapazitive Sensorstruktur 141 realisiert ist. Die gezeigte Deformations-Messstruktur 140 umfasst eine Interdigitalelektrode, an welche als Anregungssignal 71 durch die Auswertevorrichtung beispielsweise ein Wechselstromsignal angelegt werden kann, um die jeweils aktuelle Kapazität zu bestimmen.

In Fig. 3 ist beispielhaft ein Fall gezeigt, in welchem der Untergrund, auf dem sich die Deformations-Messstruktur 140 befindet, von außen (unten in Fig. 3) bereits kugelschnittförmig verformt wurde. Damit unterscheidet sich die aktuelle Kapazität der Interdigitalelektrode von derjenigen Kapazität, welche bei einer Kalibrierung dieser Deformations-Messstruktur 140 (vorzugsweise im unverformten Zustand) festgestellt wurde, sodass die Auswertevorrichtung 30 auf dieser Basis einen Verformungszustand dieser Deformations-Messstruktur 140 feststellen kann.

Zur Verbesserung der Messung kann an oder über der Schicht elektrischer Leiterbahnen 130 ein Kunststoffschaum 160 angebracht werden, beispielsweise Polyurethanschaum, Polystyrol, oder dergleichen. Dieser agiert nicht nur als zusätzliche Schutzschicht (der in Fig. 3 oben angeordneten Batterie gegen Einflüsse von außen sowie der Schicht elektrischer Leiterbahnen 130 gegen Einflüsse von innen), sondern auch als zusätzliches Dielektrikum zwischen den Interdigitalelektroden. Bei einer Verformung des Wannengehäuses 190 von außen wird somit auch dieser Kunststoff 160 verformt (gestaucht oder gestreckt), wodurch sich die elektrische Kapazität der kapazitiven Sensorstruktur 141 zusätzlich messbar verändert.

Fig. 4 zeigt eine beispielhafte isometrische Darstellung eines Ausschnitts aus der Batteriewanne 100, welcher eine einzelne Deformations-Messstruktur 140 enthält, welche als resistive Sensorstruktur 142 realisiert ist.

Wie in Fig. 4 ersichtlich ist, kann dafür eine einzelne elektrische Leitung innerhalb der Schicht elektrischer Leiterbahnen 130 zur Ausbildung der resistiven Sensorstruktur 142 mehrfach an sich entlang vor und zurück gefaltet werden, jeweils mit einem isolierenden Abstand zwischen parallelen Liniensträngen, sodass eine flächiger, dicht von der elektrischen Leitung bedeckter Abschnitt entsteht, hier in Rechtsecks- insbesondere Quadratform.

Auch in Fig. 4 ist beispielhaft eine bestehende Deformierung des Untergrunds der Deformations-Messstruktur 140 gezeigt, aufgrund dessen einzelne Abschnitte der elektrischen Leitung der Deformations-Messstruktur 140 gestaucht oder (vor allem) gedehnt werden. Es kann auch zu Kurzschlüssen oder zur vollständigen Unterbrechung durch Durchtrennung kommen. In jedem dieser Fälle ändert sich der elektrische Widerstand der resistiven Sensorstruktur 142, was wiederum durch die Auswertevorrichtung 30 erfassbar ist.

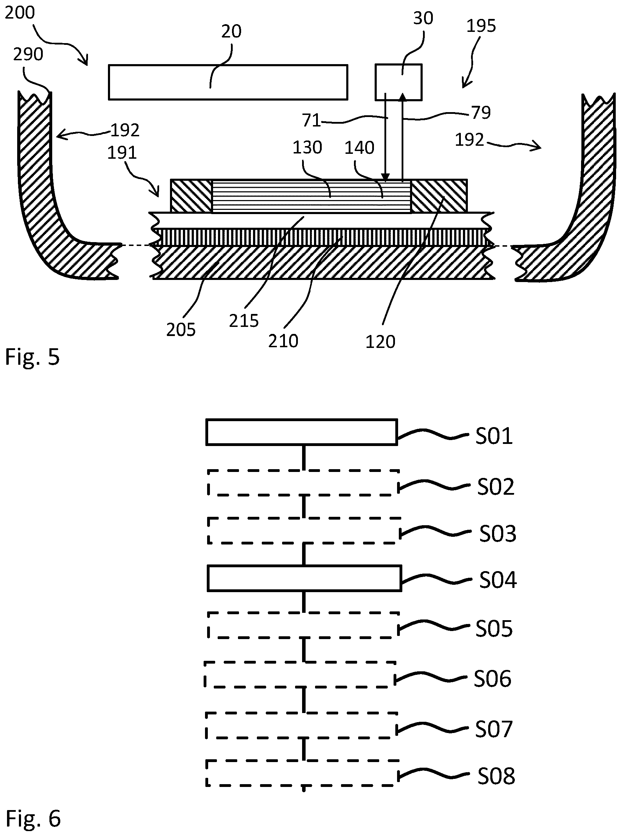

Fig. 5 zeigt eine schematische Querschnittsdarstellung zur Erläuterung einer Batteriewanne 200 gemäß einer weiteren Ausführungsform der vorliegenden Erfindung.

Die Batteriewanne 200 aus Fig. 5 ist eine Variante der Batteriewanne 100 aus Fig. 1 und unterscheidet sich von dieser darin, dass das Wannengehäuse 290 der Batteriewanne 200 zwei metallische Bestandteile umfasst. Ein erster Bestandteil besteht aus einer, oder umfasst eine, metallische Wannenform 205 mit einem Wannenboden 195.

An oder über dem Wannenboden 195 ist, als ein zweiter Bestandteil des Wannengehäuses 290, eine Metallplatte 210 mit einer elektrisch isolierenden Beschichtung 215 angebracht, an oder über welcher wiederum die Schicht elektrischer Leiterbahnen 130 und die zweite Schicht 120 angeordnet sind. Bei der Ausführungsform gemäß Fig. 5 kann somit sowohl die metallische Wannenform 205 als auch die Metallplatte 210 als auch deren Beschichtung 215 als eine erste Schicht realisierend angesehen werden.

Bei dieser Variante kann die flache Metallplatte 210 mit den daran angebrachten Deformations-Messstrukturen 140 vorteilhaft nach ihrer Herstellung in den flachen Wannenboden 191 an der Innenseite der metallischen Wannenform 205 eingelegt werden und dort befestigt werden, beispielsweise geklebt werden. Die metallische Platte 210 kann mit einer Dicke von 1 Millimeter oder weniger, insbesondere von 0,5 Millimeter oder weniger, ausgebildet sein, was sie besonders leicht macht.

Die strukturelle Stabilität des Wannengehäuses 290 wird somit im Wesentlichen durch den ersten Bestandteil, also die metallische Wannenform 205 bereitgestellt, während die elektrische Funktionalität, vor allem die Deformationssensorik, durch die Metallplatte 210 mit den daran angeordneten Deformations-Messstrukturen 140 bereitgestellt wird.

Im Folgenden werden verschiedene erfindungsgemäße Verfahren zum Herstellen der erfindungsgemäßen Batteriewannen 100; 200 beschrieben werden. Zur Erläuterung deren Verfahrensschritte werden teilweise Bezugszeichen der vorangehenden Fig. 1-5 verwendet werden, wobei es sich versteht, dass dies nicht einschränkend verstanden werden soll. Zur Vermeidung von Wiederholungen werden die Eigenschaften einzelner Elemente nicht immer im Detail ausgeführt; hierfür wird auf die vorangehende abstrakte Beschreibung der Erfindung sowie auf die detaillierte Beschreibung der Fig. 1-5 verwiesen.

Fig. 6 zeigt ein schematisches Flussdiagramm zur Erläuterung eines Verfahrens zum Herstellen einer Batteriewanne. Die hergestellte Batteriewanne kann die im Vorangehenden beschriebene Batteriewanne 100 sein, eine Variante oder Verfeinerung davon, oder eine davon verschiedene Batteriewanne. Dementsprechend ist das Verfahren gemäß allen in Bezug auf alle erfindungsgemäßen Batteriewannen und insbesondere die erfindungsgemäße Batteriewanne 100 beschriebenen Optionen, Varianten, Ausführungsformen und Verfeinerungen anpassbar und umgekehrt.

In einem Schritt S01 wird eine Vielzahl von elektrisch auslesbaren Deformations-Messstrukturen 140 an oder über einem Abschnitt eines flachen metallischen Rohlings aufgebracht, wobei beliebige im Stand der Technik bekannte Techniken hierzu verwendet werden können. Da der metallische Rohling flach ist, können die Leiterbahnen der Schicht elektrischer Leiterbahnen 130 beispielsweise mittels Druckverfahren aufgebracht werden.

Denkbar sind jedoch auch andere Verfahren, etwa Robotersprühverfahren mit Masken. Die Deformations-Messstrukturen 140 können so ausgebildet sein wie im Vorangehenden, insbesondere mit Bezug auf Fig. 1, beschrieben wurde.

Der flache metallische Rohling kann eine erste Schicht 110 aus Metall und mindestens eine darauf angebrachte Beschichtung 115 aufweisen, wobei in diesem Fall die Deformations-Messstrukturen 140 vorteilhaft einer der Beschichtungen 115 angeordnet sind. Bei dem Metall kann es sich um einen Stahl, eine Stahllegierung, Aluminium, oder eine Aluminiumlegierung handeln.

In einem optionalen Schritt S02 werden die Deformations-Messstrukturen 140 in eine Isolierschicht 120 eingebettet, wobei die Isolierschicht 120 beispielsweise eine elektrisch isolierende Lackschicht sein kann, welche die Deformations-Messstrukturen 140 seitlich (etwa gleichauf mit einer Schicht elektrischer Leiterbahnen 130) umgibt und - bevorzugt - auch oben abdeckt.

In einem optionalen Schritt S03 wird auf den Deformations-Messstrukturen 140 und der Isolierschicht 120 eine Schutzfolie aufgebracht.

In einem Schritt S04 wird der flache metallische Rohling 110, 115 mit den aufgebrachten Deformations-Messstrukturen 140 (und ggfs. Isolierschicht 120 und/oder der Schutzfolie) in ein Wannengehäuse 190 umgeformt, beispielsweise mittels Tiefziehen. Hierbei werden bevorzugt nur solche Abschnitte umgeformt, welche keine Deformations-Messstrukturen 140 aufweisen, beispielsweise nur die (späteren) Wannenwände 192 des Wannengehäuses 190, nicht jedoch der (spätere) Wannenboden 191. Mit anderen Worten bleibt der Abschnitt des metallischen Rohlings mit den Deformations-Messstrukturen 140 unverformt.

Je nach der konkreten Ausgestaltung können Abschnitte des metallischen Rohlings 110, 115, welche Zu- und/oder Ableitungen aufweisen, umgeformt werden oder nicht umgeformt werden.

In einem optionalen Schritt S05 wird die Schutzfolie nach dem Umformen S04 wieder entfernt. Die Schutzfolie kann jedoch auch, beispielsweise als eine (gegebenenfalls weitere) Isolierschicht 120, nach dem Umformen an Ort und Stelle belassen werden.

In weiteren optionalen Schritten S06-S08 kann zudem ein Kalibriervorgang einer Auswertevorrichtung 30 der Batteriewanne 100 vorgenommen werden. Dieser Kalibriervorgang S06-S08 kann unmittelbar nach Schritt S04 oder Schritt S05 und/oder nach dem Einbau der Batteriewanne 100 in seinen zukünftigen Bestimmungsort, etwa ein Fahrzeug, durchgeführt werden.

Insbesondere kann der Kalibriervorgang S06-S08 nach einem, mehreren, oder allen der folgenden Teilschritte durchgeführt werden, welche jeweils in der vorliegenden Reihenfolge oder auch in einer anderen Reihenfolge durchgeführt werden können:
- elektrisches Verbinden/Kontaktieren der Auswertevorrichtung 30 mit den Leiterbahnen der Schicht elektrischer Leiterbahnen 130,
- Aufbringen des Kunststoffschaums 160 auf die Schicht elektrischer Leiterbahnen 130,
- Anschließen der Auswertevorrichtung 30 an eine Fahrzeugelektronik eines Fahrzeugs,
- Einbau der Batterie 20 in die Batteriewanne 200 und/oder
- Einbau der Batteriewanne 200 in das Fahrzeug.

Der Kalibriervorgang S06-S08 kann auch mehrfach durchgeführt werden, insbesondere regelmäßig oder ereignisbasiert (immer wenn ein Service durchgeführt wird, immer wenn ein Stoß festgestellt wurde, etc.).

In einem Schritt S06 wird, insbesondere nach dem Umformen S04, jeweils ein elektrisches Anregungssignal 71 an zumindest einen Teil (bevorzugt alle) der Deformations-Messstrukturen 140 angelegt.

In einem Schritt S07 wird eine jeweilige Signalantwort 79 der Deformations-Messstrukturen 140 auf das jeweils angelegte Anregungssignal 71 elektrisch ausgelesen, beispielsweise durch die Auswertevorrichtung 30, wie dies im Vorangehenden bereits erläutert wurde.

In einem Schritt S08 wird die Auswertevorrichtung 30 derart kalibriert (d.h. insbesondere, deren Entscheidungsalgorithmus derart angepasst), dass die jeweils ausgelesene Signalantwort 79 einen unverformten Normalzustand der jeweiligen Deformations-Messstruktur 140 anzeigt, und Abweichungen in der Signalantwort 79 einen Verformungszustand der jeweiligen Deformations-Messstruktur 140 anzeigen.

In weiteren optionalen Schritten kann beispielsweise durch die Auswertevorrichtung 30 ein Ausgabesignal ausgegeben werden, welches den Normalzustand und/oder Deformationszustand einer oder mehrerer Deformations-Messstrukturen 140 anzeigt, optional mit zusätzlichen Informationen wie etwa den Grad der Verformung.

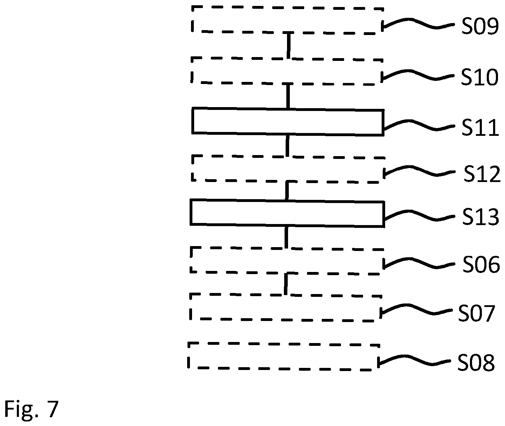

Fig. 7 zeigt ein schematisches Flussdiagramm zur Erläuterung eines weiteren Verfahrens zum Herstellen einer Batteriewanne. Die hergestellte Batteriewanne kann die im Vorangehenden beschriebene Batteriewanne 200 sein, eine Variante oder Verfeinerung davon, oder eine davon verschiedene Batteriewanne. Dementsprechend ist das Verfahren gemäß allen in Bezug auf alle erfindungsgemäßen Batteriewannen und insbesondere die erfindungsgemäße Batteriewanne 200 beschriebenen Optionen, Varianten, Ausführungsformen und Verfeinerungen anpassbar und umgekehrt.

In einem optionalen Schritt S09 kann zunächst eine metallische Wannenform 205 ausgebildet werden, beispielsweise durch Umformen, wie etwa Tiefziehen, aus einem Blech aus Metall, insbesondere Stahl, Aluminium, Stahllegierung, oder Aluminiumlegierung. Dies kann umfassen, dass ein zum Umformen vorgesehenes Metallteil zunächst durch Stanzen oder Schneiden in eine, insbesondere nicht-rechteckige, Form zugeschnitten wird. Auf diese Weise können Außenkonturen der Wannenform 205 erzielt werden, wie sie etwa in Fig. 2B zu sehen sind. Die metallische Wannenform 205 kann jedoch alternativ auch fertig bereitgestellt werden.

In einem optionalen Schritt S10 kann, zum Herstellen einer metallischen Platte 210, auf der Metallschicht eines Metallrohlings, etwa einem Metallblech, eine isolierende Beschichtung 215 aufgebracht werden. Die isolierende Beschichtung 215 kann beispielsweise eine Beschichtung auf Lackbasis sein, zum Beispiel kann es um ein Grundlacksystem (auch: Primer-Schicht von englisch "primer") handeln. Das Grundlacksystem kann in dem Schritt S10 mittels Bandbeschichtung auf Metallblech, z.B. Stahlblech, aufgetragen werden und beispielsweise zwischen 6 Mikrometern und 100 Mikrometern (pm) dick sein, insbesondere zwischen 60 Mikrometern und 90 Mikrometern, beispielsweise 80 Mikrometer dick.

In einem Schritt S11 wird eine Vielzahl von elektrisch auslesbaren Deformations-Messstrukturen 140 an oder über einer metallischen Platte 210 aufgebracht, beispielsweise wie im Vorangehenden mit Bezug auf Fig. 1-4 und insbesondere Fig. 5 erläutert wurde. Da die metallische Platte 210 flach ist, können die Leiterbahnen der Schicht elektrischer Leiterbahnen 130 beispielsweise mittels Druckverfahren aufgebracht werden. Denkbar sind jedoch auch andere Verfahren, etwa Robotersprühverfahren mit Masken.

Die metallische Platte 210 kann eine Metallschicht mit einer unmittelbar daran angebrachten elektrisch isolierenden Beschichtung 215 aufweisen, und zu diesem Zweck in dem optionalen Schritt S10 bearbeitet worden sein. Fällt der optionale Schritt S10 aus, kann eine bereits fertig mit der isolierenden Beschichtung 215 beschichtete metallische Platte 210 verwendet werden. Die Deformations-Messstrukturen 140 werden in dem Schritt S11 an oder über, vorzugsweise unmittelbar an, der isolierenden Beschichtung 215 der metallischen Platte 210 aufgebracht.

In einem optionalen Schritt S12 wird auf der metallischen Platte 210 (insbesondere unmittelbar an der isolierenden Beschichtung 215) eine Isolierschicht 120 angebracht, wobei die Deformations-Messstrukturen 140 in die Isolierschicht eingebettet werden. Dabei umschließt die Isolierschicht die Deformations-Messstrukturen 140 zumindest seitlich (also innerhalb einer Schicht elektrischer Leiterbahnen 130, in welcher die Deformations-Messstrukturen ausgebildet sind), und bevorzugt zusätzlich an allen Seiten. Alternativ oder zusätzlich kann in diesem Schritt auch ein elektrisch isolierender Kunststoffschaum 160 aufgebracht werden.

In einem Schritt S13 wird die metallische Platte 210, 215 (optional mit der daran angebrachten Isolierschicht 120) innen an einem Wannenboden 191 einer metallischen Wannenform 205 befestigt, beispielsweise angeklebt. Ein elektrisch isolierender Kunststoffschaum 160 kann auch danach noch auf den Wannenboden 191 mit der darin angeklebten metallischen Platte 210 aufgebracht werden.

Auch bei diesem Verfahren kann der bereits mit Bezug auf Fig. 6 beschriebene Kalibriervorgang S06-S08 durchgeführt werden, insbesondere nach einem oder mehreren der folgenden Teilschritte, welche jeweils in der vorliegenden Reihenfolge oder auch in einer anderen Reihenfolge durchgeführt werden können:
- elektrisches Verbinden/Kontaktieren der Auswertevorrichtung 30 mit den Leiterbahnen der Schicht elektrischer Leiterbahnen 130,
- Aufbringen des Kunststoffschaums 160 auf die Schicht elektrischer Leiterbahnen 130,
- Anschließen der Auswertevorrichtung 30 an eine Fahrzeugelektronik eines Fahrzeugs,
- Einbau der Batterie 20 in die Batteriewanne 200 und/oder
- Einbau der Batteriewanne 200 in das Fahrzeug.

### Bezugszeichenliste

- 20: Batterie
- 30: Auswertevorrichtung
- 71: Anregungssignal
- 79: Signalantwort
- 100: Batteriewanne
- 110: erste durchgehende Schicht
- 115: Beschichtung
- 120: zweite durchgehende Schicht
- 130: Schicht elektrischer Leiterbahnen
- 140: Deformations-Messstrukturen
- 141: kapazitive Sensorstruktur
- 142: resistive Sensorstruktur
- 160: Kunststoffschaum
- 190: Wannengehäuse
- 191: Wannenboden
- 192: Wannenwand
- 195: konkaver Hohlraum der Wannenform des Wannengehäuses
- 200: Batteriewanne
- 205: metallische Wannenform
- 210: Metallplatte
- 215: Beschichtung
- 290: Wannengehäuse
- S01..S13: Verfahrensschritte

## Patentansprüche

1. Batteriewanne (100; 200) zum Aufnehmen einer Batterie (20), umfassend:
ein Wannengehäuse (190; 290);
wobei eine Schicht elektrischer Leiterbahnen (130) an oder über einer durchgehenden ersten Schicht (110; 210) des Wannengehäuses (190; 290) an dessen konkaver Seite angeordnet ist, und
wobei in der Schicht elektrischer Leiterbahnen (130) zumindest an einem ebenen Abschnitt des Wannengehäuses (190; 290) eine Vielzahl von elektrisch auslesbaren Deformations-Messstrukturen (140) ausgebildet ist.

2. Batteriewanne (100) nach Anspruch 1,
wobei die erste Schicht (110) des Wannengehäuses (190) aus einem Metall, insbesondere aus Stahl oder Aluminium oder aus einer Stahl- oder Aluminiumlegierung, ausgebildet ist.

3. Batteriewanne (200) nach Anspruch 2,
wobei die Schicht elektrischer Leiterbahnen (130) in eine zweite Schicht (120) des Wannengehäuses (190; 290) eingebettet ist, und
wobei die zweite Schicht (120) insbesondere eine Lackbeschichtung ist.

4. Batteriewanne (200) nach einem der Ansprüche 1 bis 3, wobei das Wannengehäuse (290) einen in Wannenform ausgebildeten ersten metallischen Bestandteil (205) sowie einen flachen zweiten metallischen Bestandteil (210) aufweist, welcher, insbesondere direkt, an einem Wannenboden (191) der Wannenform des ersten Bestandteils (205) an dessen konkaver Seite angebracht ist, und
wobei die durchgehende erste Schicht des Wannengehäuses (290) von dem zweiten Bestandteil (210) gebildet wird.

5. Batteriewanne (200) nach Anspruch 4,
wobei der zweite Bestandteil als eine metallische Platte (210) mit einer Dicke von 1 Millimeter oder weniger, insbesondere von 0,5 Millimeter oder weniger, ausgebildet ist.

6. Batteriewanne (100; 200) nach einem der Ansprüche 1 bis 5,
wobei die Deformations-Messstrukturen (140) zumindest teilweise als kapazitive Sensorstrukturen (141) ausgebildet sind.

7. Batteriewanne (100; 200) nach Anspruch 6,
wobei die kapazitiven Sensorstrukturen (141) zumindest teilweise als Interdigitalelektroden ausgeführt sind.

8. Batteriewanne (100; 200) nach einem der Ansprüche 1 bis 7,
wobei die Deformations-Messstrukturen (140) zumindest teilweise als resistive Sensorstrukturen (142) ausgebildet sind.

9. Batteriewanne (100; 200) nach einem der Ansprüche 6 bis 8,
wobei die Sensorstrukturen (141, 142) an einer von dem Wannengehäuse (190; 290) abgewandten Seite mit einem Kunststoffschaum (160), insbesondere Polyurethanschaum oder Polystyrol, bedeckt sind.

10. Batteriewanne (100; 200) nach einem der Ansprüche 1 bis 9, ferner umfassend eine Auswertevorrichtung (30), welche dazu eingerichtet ist:
ein elektrisches Anregungssignal (71) an zumindest einen Teil der Deformations-Messstrukturen (140) anzulegen,
sowie eine jeweilige Signalantwort (79) der Deformations-Messstrukturen (140) auf das jeweilige Anregungssignal (71) auszulesen, um darauf basierend einen Normalzustand oder einen Deformationszustand der jeweiligen Deformations-Messstruktur (140) zu bestimmen.

11. Batteriewanne (100; 200) nach Anspruch 10,
wobei die Auswertevorrichtung (30) in einem Kalibriervorgang (S06-S08) derart kalibrierbar ist, dass eine jeweilige aktuelle Signalantwort (79) während des Kalibriervorgangs (S06-S08) den Normalzustand anzeigt und Abweichungen davon den Verformungszustand der jeweiligen Deformations-Messstruktur (140) anzeigen.

12. Verfahren zum Herstellen einer Batteriewanne (100), umfassend zumindest die Schritte:
Aufbringen (S01) einer Vielzahl von elektrisch auslesbaren Deformations-Messstrukturen (140) an oder über einem Abschnitt eines flachen metallischen Rohlings (110); und
Umformen (S05) des flachen metallischen Rohlings (110) mit den aufgebrachten Deformations-Messstrukturen (140) in ein Wannengehäuse (190).

13. Verfahren nach Anspruch 12,
wobei der Abschnitt des flachen metallischen Rohlings (110) mit den Deformations-Messstrukturen (140) unverformt bleibt.

14. Verfahren zum Herstellen einer Batteriewanne (300), umfassend zumindest die Schritte:
Aufbringen (S10) einer Vielzahl von elektrisch auslesbaren Deformations-Messstrukturen (140) an oder über einer metallischen Platte (210); und
Befestigen (S12) der metallischen Platte (210) mit der daran angebrachten Isolierschicht (120) innen an einem Wannenboden (191) einer metallischen Wannenform (205).

15. Verfahren nach einem der Ansprüche 12 bis 14, ferner umfassend:
Anlegen (S06) eines elektrischen Anregungssignals (71) an zumindest einen Teil der Deformations-Messstrukturen (140);
Elektrisches Auslesen (S07) einer jeweiligen Signalantwort (79) der Deformations-Messstrukturen (140) auf das jeweils angelegte Anregungssignal (71); und
Kalibrieren (S08) einer Auswertevorrichtung (30) derart, dass die jeweils ausgelesene Signalantwort (79) einen unverformten Normalzustand der jeweiligen Deformations-Messstruktur (140) anzeigt und Abweichungen in der Signalantwort (79) einen Verformungszustand der jeweiligen Deformations-Messstruktur (140) anzeigen.
